# EUROPEAN PATENT SPECIFICATION

(11) **EP 2 846 238 B1**
(45) Date of publication and mention of the grant of the patent: **19.07.2017**
(21) Application number: 13846242.9
(22) Date of filing: 29.05.2013
(51) Int. Cl.: G06F 1/16, G06F 3/0346, G06F 3/0488, H04M 1/02, H04M 1/725, G06F 3/0484

(54) **METHOD FOR SWITCHING AND PRESENTATION OF OPERATION MODE OF TERMINAL, AND TERMINAL**
VERFAHREN ZUR UMSCHALTUNG UND PRÄSENTATION EINES BETRIEBSMODUS EINES ENDGERÄTS SOWIE ENDGERÄT
PROCÉDÉ DE COMMUTATION ET DE PRÉSENTATION D'UN MODE DE FONCTIONNEMENT DE TERMINAL, ET TERMINAL

(43) Date of publication of application: 11.03.2015
(73) Proprietor: Huawei Technologies Co., Ltd., Longgang District Shenzhen, Guangdong 518129 (CN)
(72) Inventor: TANG, Ling, Shenzhen Guangdong 518129 (CN)
(74) Representative: Gill Jennings & Every LLP
(86) International application number: PCT/CN2013/076428
(87) International publication number: WO 2014/190511

(56) References cited:
- WO-A1-2012/061917
- CN-A- 101 968 710
- CN-A- 102 232 211
- CN-A- 102 810 039
- TW-A- 201 128 450
- US-A1- 2010 105 443
- US-A1- 2013 019 192

## Description

### TECHNICAL FIELD

Embodiments of the present invention relate to the technical field of terminal devices, and in particular, to a method for switching and presenting a terminal operation mode and a terminal.

### BACKGROUND

At present, the size of a screen of a mainstream mobile terminal (for example, a mobile phone, a tablet computer, and the like) on the market is larger. A large screen provides users with better experience and visual perception. However, under some specific circumstances, a user may need to operate a terminal with a single hand, and a terminal with a large screen may cause inconvenience to one-hand operation.

US 2013/0019192A1 discloses a switching system between screen displays by receiving orientation information and determining which hand of the user holds the apparatus.

### SUMMARY

The present invention provides a method for switching and presenting a terminal operation mode and a terminal, which enables a user to conveniently switch an operation mode of a terminal to facilitate operations on the terminal with a single hand.

According to a first aspect, an embodiment of the present invention provides a method for switching and presenting a terminal operation mode, including: acquiring information about a space status change of a terminal; determining whether an extent of the space status change of the terminal falls within a preset range according to the information about the space status change; determining an operation mode of the terminal when the extent of the space status change of the terminal falls within the preset range, where the operation mode includes a first operation mode or a second operation mode, the first operation mode facilitates an operation on an operable element in an operation interface of the terminal with the left hand, and the second operation mode facilitates an operation on an operable element in an operation interface of the terminal with the right hand; and presenting the operable element in an operation interface of the terminal according to the determined operation mode.

The determining an operation mode of the terminal when the extent of the space status change of the terminal falls within the preset range includes: determining the operation mode by acquiring current information about a left-hand operation or a right-hand operation on the terminal when the extent of the space status change of the terminal falls within the preset range.

The acquiring information about a space status change of a terminal may include: determining a shake frequency of the terminal; the determining whether an extent of the space status change of the terminal falls within a preset range according to the information about the space status change includes: determining that the extent of the space status change of the terminal falls within the preset range when the shake frequency of the terminal falls within a preset frequency change range; and the determining the operation mode by acquiring current information about a left-hand operation or a right-hand operation on the terminal when the extent of the space status change of the terminal falls within the preset range includes: acquiring a current operation mode of the terminal, where the current operation mode includes the first operation mode or the second operation mode, determining that the operation mode is the second operation mode when the extent of the space status change of the terminal falls within the preset range and the acquired current operation mode is the first operation mode, and determining that the operation mode is the first operation mode when the extent of the space status change of the terminal falls within the preset range and the acquired current operation mode is the second operation mode.

With reference to the first aspect or any one of the foregoing possible implementation manners, that the first operation mode facilitates an operation on an operable element in an operation interface of the terminal with the left hand, and the second operation mode facilitates an operation on an operable element in an operation interface of the terminal with the right hand includes: the operable element in the operation interface being closer to a left edge of the display interface of the terminal in the first operation mode than in the second operation mode; or the operable element in the operation interface is closer to a right edge of the display interface of the terminal in the second operation mode than in the first operation mode.

The first operation mode may facilitate an operation on an operable element in an operation interface of the terminal with the left hand, or the second operation mode facilitates an operation on an operable element in an operation interface of the terminal with the right hand includes: the operable element in the operation interface is adjacent to a left edge of the display interface of the terminal in the first operation mode; or the operable element in the operation interface is adjacent to a right edge of the display interface of the terminal in the second operation mode.

With reference to the first aspect or any one of the foregoing possible implementation manners, the operable element in the operation interface includes a virtual keyboard, one or a plurality of keys on the virtual keyboard, a menu, or a dialog box.

According to a second aspect, an embodiment of the present invention provides a terminal. The terminal includes: a motion sensing unit, configured to acquire a space status parameter of the terminal; a processing unit, configured to acquire information about a space status change of the terminal according to the space status parameter acquired by the motion sensing unit; a judging unit, configured to determine whether an extent of the space status change of the terminal falls within a preset range according to the information about the space status change; a mode determining unit, configured to determine an operation mode of the terminal when the extent of the space status change of the terminal falls within the preset range, where the operation mode includes a first operation mode or a second operation mode, the first operation mode facilitates an operation on an operable element in an operation interface of the terminal with the left hand, and the second operation mode facilitates an operation on an operable element in an operation interface of the terminal with the right hand; and a display unit, configured to display the operable element in the operation interface of the terminal according to the determined operation mode.

The mode determining unit is specifically configured to determine the operation mode by acquiring current information about a left-hand operation or a right-hand operation on the terminal.

The processing unit is specifically configured to determine a shake frequency of the terminal; the judging unit is specifically configured to determine that the extent of the space status change of the terminal falls within the preset range when the shake frequency of the terminal falls within a preset frequency change range; and the mode determining unit is specifically configured to acquire a current operation mode of the terminal, where the operation mode includes the first operation mode or the second operation mode, determine that the operation mode is the second operation mode when the extent of the space status change of the terminal falls within the preset range and the acquired current operation mode is the first operation mode, and determine that the operation mode is the first operation mode when the extent of the space status change of the terminal falls within the preset range and the acquired current operation mode is the second operation mode.

With reference to the second aspect or any one of the foregoing possible implementation manners the display unit may be specifically configured to display the operable element in the operation interface closer to a left edge of the display interface of the terminal in the first operation mode than in the second operation mode; or the display unit is specifically configured to display the operable element in the operation interface closer to a right edge of the display interface of the terminal in the second operation mode than in the first operation mode.

The display unit may be specifically configured to display the operable element in the operation interface adjacent to a left edge of the display interface of the terminal in the first
operation mode; or the display unit is specifically configured to display an operable element in the operation interface adjacent to a right edge of the display interface of the terminal in the second operation mode.

According to the embodiments of the present invention, the terminal is capable of determining a corresponding operation mode when the extent of the space status change falls within the preset range. Therefore, the user of the terminal, especially a user of a large-screen terminal, may switch to a left-hand operation mode or a right-hand operation mode by adjusting the space status of the terminal to enable the terminal to acquire the information about the space status change of the terminal. The switching method is simple to implement, thereby enabling the user to switch to a single-hand operation mode that is easy to use.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a method for switching and presenting a terminal operation mode according to an embodiment of the present invention;
FIG. 2 is a schematic flowchart of a method for switching and presenting a terminal operation mode according to a comparative example;
FIG. 3 is a schematic flowchart of another method for switching and presenting a terminal operation mode according to comparative example;
FIG. 4 is a schematic flowchart of another method for switching and presenting a terminal operation mode according to an embodiment of the present invention;
FIG. 5 is a schematic diagram of operation modes and operable elements according to an embodiment of the present invention;
FIG. 6 is a schematic diagram of operation modes and operable elements according to an embodiment of the present invention;
FIG. 7 is a schematic diagram of operation modes and operable elements according to an embodiment of the present invention;
FIG. 8 is a schematic diagram of operation modes and operable elements according to an embodiment of the present invention;
FIG. 9 is a schematic diagram of operation modes and operable elements according to an embodiment of the present invention;
FIG. 10 is a schematic diagram of space status of a terminal according to an embodiment of the present invention;
FIG. 11 is a schematic diagram of a direction of a space rotation change according to an embodiment of the present invention;
FIG. 12 is a schematic diagram of a direction of a space rotation change according to an embodiment of the present invention;
FIG. 13 is a structural block diagram of a terminal according to an embodiment of the present invention; and
FIG. 14 is a structural block diagram of a computer system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments acquired by persons of ordinary skill in the art based on the embodiments of the present invention without creative efforts shall fall within the protection scope of the present invention.

A terminal mentioned in the present invention is also referred to as user equipment (User Equipment, UE), a mobile terminal (Mobile Terminal, MT), mobile user equipment, or the like. The terminal includes a touch screen and a user performs an operation on the terminal by using the touch screen. The terminal may be an MT, such as a mobile phone (also referred to as a "cellular" phone) with a touch screen or a computer with a touch screen. For example, the terminal may be a portable, pocket-sized, handheld, or computer-embedded mobile apparatus, or a vehicle-mounted mobile apparatus with a touch screen.

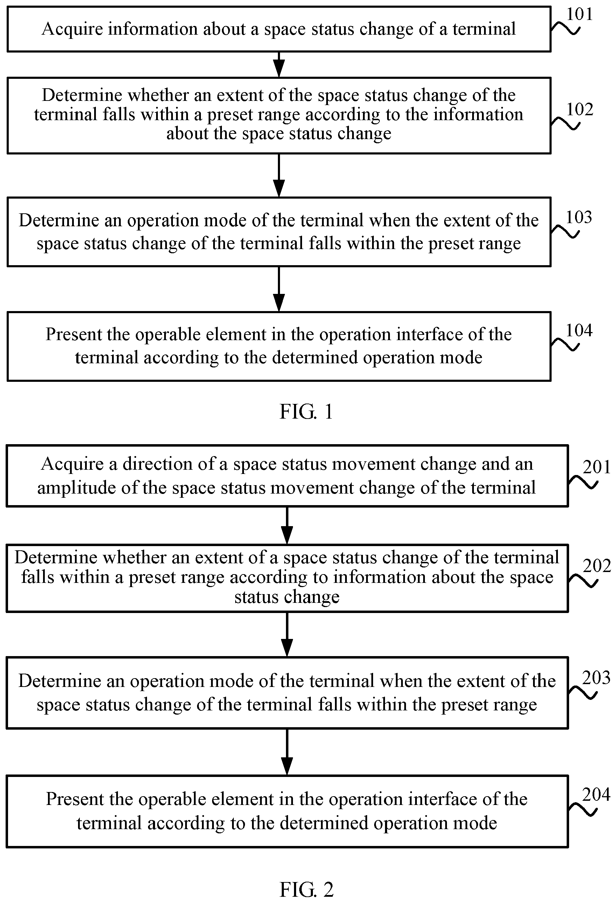

FIG. 1 is a schematic flowchart of a method for switching and presenting a terminal operation mode according to an embodiment of the present invention.

101. Acquire information about a space status change of a terminal.

Specifically, a space status parameter of the terminal may be acquired by using a motion sensor (for example, a gravity sensor, a gyroscope, or the like), and the information about the space status change of the terminal may be acquired according to the space status parameter.

102. Determine whether an extent of the space status change of the terminal falls within a preset range according to the information about the space status change.

103. Determine an operation mode of the terminal when the extent of the space status change of the terminal falls within the preset range, where the operation mode of the terminal includes a first operation mode or a second operation mode, the first operation mode helps a user of the terminal to operate an operable element in an operation interface of the terminal with the left hand, and the second operation mode helps the user of the terminal to operate an operable element in an operation interface of the terminal with the right hand.

In a comparative example, the determining an operation mode of the terminal when the extent of the space status change of the terminal falls within the preset range includes: determining the operation mode by using a direction of the space status change of the terminal acquired according to the information about the space status change when the extent of the space status change of the terminal falls within the preset range. In an embodiment of the invention determining the operation mode is performed by acquiring current information about a left-hand operation or a right-hand operation on the terminal when the extent of the space status change of the terminal falls within the preset range.

104. Present the operable element in the operation interface of the terminal according to the determined operation mode.

According to the method shown in FIG. 1, the terminal is capable of determining the operation mode when the extent of the space status change falls within the preset range. Therefore, the user of the terminal may switch the terminal to a corresponding operation mode by adjusting the terminal, so as to conveniently operate the terminal with a single hand.

Optionally, the acquiring information about a space status change of a terminal includes: acquiring a direction of a space status movement change and an amplitude of the space status movement change of the terminal, or determining a direction of a space status rotation change and an angle of the space status rotation change of the terminal, or determining a shake frequency of the terminal.

FIG. 2 is a schematic flowchart of a method for switching and presenting a terminal operation mode according to a comparative example. The method shown in FIG. 2 is a comparative example of the method shown in FIG. 1.

201. Acquire a direction of a space status movement change and an amplitude of the space status movement change of a terminal.

The direction of the space status movement change of the terminal includes a leftward movement change or a rightward movement change. Specifically, the leftward movement change indicates that the terminal moves towards the left hand side of a user of the terminal when the screen of the terminal faces the user of the terminal. The rightward movement change indicates that the terminal moves towards the right hand side of the user of the terminal when the screen of the terminal faces the user of the terminal.

The amplitude of the space status movement change includes a leftward movement amplitude or a rightward movement amplitude of the terminal. Specifically, the leftward movement amplitude indicates a movement distance towards the left hand side of the user of the terminal when the screen of the terminal faces the user of the terminal. The rightward movement amplitude indicates a movement distance towards the right hand side of the user of the terminal when the screen of the terminal faces the user of the terminal.

202. Determine whether an extent of a space status change of the terminal falls within a preset range according to information about the space status change.

Specifically, it is determined that the extent of the space status change of the terminal falls within the preset range when the amplitude of the space status movement change falls within a preset amplitude change range. Further, a specific sensitive area may be excluded from the preset amplitude change range to prevent an operation mode from changing when the space status change occurred falls outside the preset amplitude range under certain special circumstances (for example, unconscious shaking of the hand operating the terminal, terminal shaking on a bumpy ride, and the like).

Optionally, a movement amplitude threshold of the terminal may be preset, so that it is determined that the extent of the space status change of the terminal falls within the preset range when the leftward movement amplitude or the rightward movement amplitude of the terminal exceeds the preset movement amplitude threshold of the terminal. Preferably, the preset movement amplitude threshold of the terminal is related to an average amplitude of unconscious shaking of the hand operating the terminal and an average amplitude of terminal shaking on a bumpy ride, so as to avoid misoperations caused by unconscious shaking of the hand operating the terminal or terminal shaking on the bumpy ride.

203. Determine an operation mode of the terminal when the extent of the space status change of the terminal falls within the preset range, where the operation mode of the terminal includes a first operation mode or a second operation mode, the first operation mode helps a user of the terminal to operate an operable element in an operation interface of the terminal with the left hand, or the second operation mode helps the user of the terminal to operate an operable element in an operation interface of the terminal with the right hand.

The determining an operation mode of the terminal when the extent of the space status change of the terminal falls within the preset range includes: determining the operation mode by using a direction of the space status change of the terminal acquired according to the information about the space status change when the extent of the space status change of the terminal falls within the preset range. Specifically, it is determined that the operation mode of the terminal is the first operation mode when it is determined that the extent of the space status change of the terminal falls within the preset range and the direction of the space status movement change of the terminal is the leftward movement change. It is determined that the operation mode of the terminal is the second operation mode when it is determined that the extent of the space status change of the terminal falls within the preset range and the direction of the space status movement change of the terminal is the rightward movement change, where the first operation mode and the second operation mode are used to represent two different operation modes, and shall not be construed as a specific limitation on the operation mode.

204. Present the operable element in the operation interface of the terminal according to the determined operation mode.

Therefore, when the user of the terminal changes the terminal from right-hand holding to left-hand holding, the terminal quickly moves leftward for a certain distance. In this way, the terminal switches the operation mode to the first operation mode according to the method shown in FIG. 2 to help the user of the terminal to operate the terminal with the left hand. Similarly, when the user of the terminal changes the terminal from the left-hand holding to the right-hand holding, the terminal quickly moves rightward for a certain distance. In this way, the terminal switches the operation mode to the second operation mode according to the method shown in FIG. 2 to help the user of the terminal to operate the terminal with the right hand. Alternatively, if the user of the terminal wants to switch the operation mode of the terminal, the user of the terminal can move the terminal leftward or rightward to switch to the first operation mode or the second operation mode.

According to the method shown in FIG. 2, the terminal is capable of determining the operation mode when the extent of the space status change falls within the preset range. Therefore, the user of the terminal may switch the terminal to a corresponding operation mode by adjusting the terminal so as to conveniently operate the terminal with a single hand.

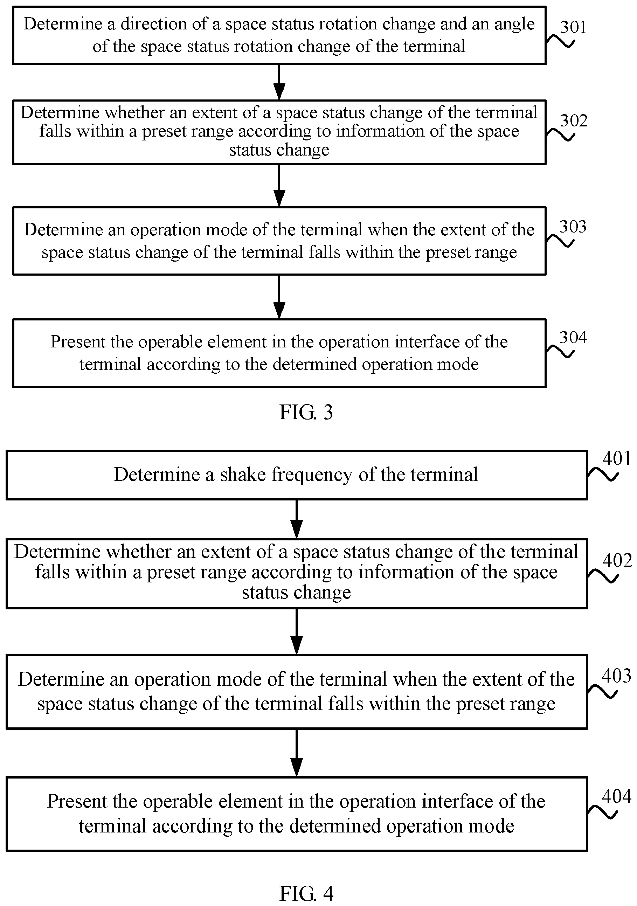

FIG. 3 is a schematic flowchart of another method for switching and presenting a terminal operation mode according to a comparative example. The method shown in FIG. 3 is a comparative example of the method shown in FIG. 1.

301. Determine a direction of a space status rotation change and an angle of the space status rotation change of a terminal.

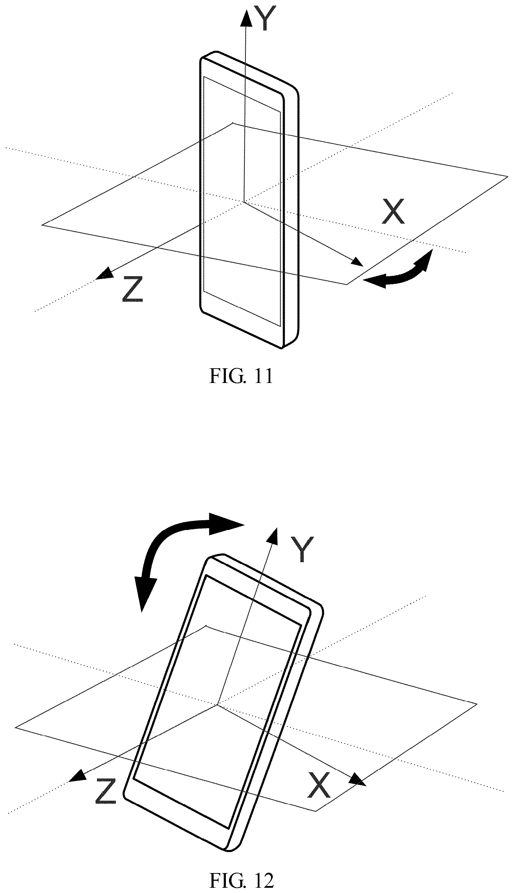

The direction of the space status rotation change of the terminal includes a clockwise rotation direction or a counterclockwise rotation direction. Specifically, the clockwise rotation direction indicates that the terminal rotates clockwise when the screen of the terminal faces a user of the terminal. The counterclockwise rotation direction indicates that the terminal rotates counterclockwise when the screen of the terminal faces the user of the terminal. It should be noted that the clockwise rotation and the counterclockwise rotation do not include clockwise rotation and counterclockwise rotation on a plane of the screen of the terminal. In other words, the direction of the space status rotation change of the terminal refers to the direction of the rotation change shown in FIG. 11, instead of the direction of the rotation change shown in FIG. 12.

The angle of the space status rotation change includes a clockwise rotation angle or a counterclockwise rotation angle. Specifically, the clockwise rotation angle indicates the clockwise rotation angle of the terminal when the screen of the terminal faces the user of the terminal. The counterclockwise rotation angle indicates the counterclockwise rotation angle of the terminal when the screen of the terminal faces the user of the terminal.

302. Determine whether an extent of a space status change of the terminal falls within a preset range according to information about the space status change.

Specifically, it is determined that the extent of the space status change of the terminal falls within the preset range when the angle of the space status rotation change falls within a preset angle change range. Further, a specific sensitive area may be excluded from the preset angle range to prevent an operation mode from changing when the space status change occurred falls outside the preset angle range under certain special circumstances (for example, hand shaking, bumpy ride, and the like).

Optionally, a rotation angle threshold of the terminal is preset, so that it is determined that the extent of the space status change of the terminal falls within the preset range when the clockwise rotation angle or the counterclockwise rotation angle of the terminal exceeds the preset rotation angle threshold of the terminal. Preferably, the preset rotation angle threshold of the terminal is related to an average amplitude of unconscious shaking of the hand operating the terminal and an average amplitude of terminal shaking on a bumpy ride, so as to avoid misoperations caused by unconscious shaking of the hand operating the terminal or terminal shaking on the bumpy ride.

303. Determine an operation mode of the terminal when the extent of the space status change of the terminal falls within the preset range, where the operation mode of the terminal includes a first operation mode or a second operation mode, the first operation mode helps a user of the terminal to operate an operable element in an operation interface of the terminal with the left hand, and the second operation mode helps the user of the terminal to operate an operable element in an operation interface of the terminal with the right hand.

The determining an operation mode of the terminal when the extent of the space status change of the terminal falls within the preset range includes: determining the operation mode by using a direction of the space status change of the terminal acquired according to the information about the space status change when the extent of the space status change of the terminal falls within the preset range. Specifically, it is determined that the operation mode of the terminal is the first operation mode when it is determined that the extent of the space status change of the terminal falls within the preset range and the direction of the space status movement change of the terminal is the clockwise rotation direction. It is determined that the operation mode of the terminal is the second operation mode when it is determined that the extent of the space status change of the terminal falls within the preset range and the direction of the space status change of the terminal is the counterclockwise rotation direction.

304. Present the operable element in the operation interface of the terminal according to the determined operation mode.

According to the method shown in FIG. 3, the terminal is capable of determining the operation mode when the extent of the space status change falls within the preset range. Therefore, the user of the terminal may switch the terminal to a corresponding operation mode by adjusting the terminal so as to conveniently operate the terminal with a single hand.

FIG. 4 is a schematic flowchart of a method for switching and presenting a terminal operation mode according to an embodiment of the present invention. The method shown in FIG. 4 is a specific embodiment of the method shown in FIG. 1.

401. Determine a shake frequency of a terminal.

402. Determine whether an extent of a space status change of the terminal falls within a preset range according to information about the space status change.

Specifically, it is determined that the extent of the space status change of the terminal falls within the preset range when the shake frequency of the terminal falls within a preset frequency change range. Further, a specific sensitive area may be excluded from the preset frequency range to prevent an operation mode from changing when the space status change occurred falls outside the preset frequency range under certain special circumstances (for example, hand shaking, bumpy ride, and the like).

403. Determine an operation mode of the terminal when the extent of the space status change of the terminal falls within the preset range, where the operation mode of the terminal includes a first operation mode or a second operation mode, the first operation mode helps a user of the terminal to operate an operable element in an operation interface of the terminal with the left hand, and the second operation mode helps the user of the terminal to operate an operable element in an operation interface of the terminal with the right hand.

The determining an operation mode of the terminal when the extent of the space status change of the terminal falls within the preset range includes: determining the operation mode by acquiring current information about a left-hand operation or a right-hand operation on the terminal when the extent of the space status change of the terminal falls within the preset range. Specifically, a current operation mode of the terminal is acquired, where the current operation mode includes the first operation mode or the second operation mode; it is determined that the operation mode of the terminal is the second operation mode when the extent of the space status change of the terminal falls within the preset range and the acquired current operation mode of the terminal is the first operation mode; and it is determined that the operation mode of the terminal is the first operation mode when the extent of the space status change of the terminal falls within the preset range and the acquired current operation mode of the terminal is the second operation mode.

In a comparative example, prior to the determining an operation mode of the terminal, the method further includes: acquiring holding position information, where the holding position information includes left-hand holding or right-hand holding. Specifically, it may be determined that the holding position information is the left-hand holding or the right-hand holding by using a contact or non-contact sensor. Holding positions are different when a user of the terminal operates the terminal with the left or right hand. In other words, a specific position can be contacted when the user holds the terminal with the left hand, and a different specific position may be contacted when the user holds the terminal with the right hand. If a contact or non-contact sensor (for example, a touch sensor, a photoelectric sensor, or the like) may be arranged in the specific position, when a hand of the user blocks or touches the sensor in the specific position, whether the user of the terminal uses the left hand or right hand to hold the terminal may be determined according to the position of the sensor. In this case, the determining the operation mode by acquiring current information about a left-hand operation or a right-hand operation on the terminal when the extent of the space status change of the terminal falls within the preset range includes: determining that the operation mode is the second operation mode when the extent of the space change of the terminal falls within the preset range and the holding position information is the right-hand holding, and determining that the operation mode is the first operation mode when the extent of the space change of the terminal falls within the preset range and the holding position information is the left-hand holding.

404. Present the operable element in the operation interface of the terminal according to the determined operation mode.

According to the method shown in FIG. 4, the terminal is capable of determining the operation mode when the extent of the space status change falls within the preset range. Therefore, the user of the terminal may switch the terminal to a corresponding operation mode by adjusting the terminal so as to conveniently operate the terminal with a single hand.

In the methods shown in FIG. 1 to FIG. 4, that the first operation mode facilitates an operation on an operable element in an operation interface of the terminal with the left hand, or the second operation mode facilitates an operation on an operable element in an operation interface of the terminal with the right hand includes: the operable element in the operation interface is closer to a left edge of the display interface of the terminal in the first operation mode than in the second operation mode, and the operable element in the operation interface is closer to a right edge of the display interface of the terminal in the second operation mode than in the first operation mode; or the operable element in the operation interface is adjacent to a left edge of the display interface of the terminal in the first operation mode, and the operable element in the operation interface is adjacent to a right edge of the display interface of the terminal in the second operation mode.

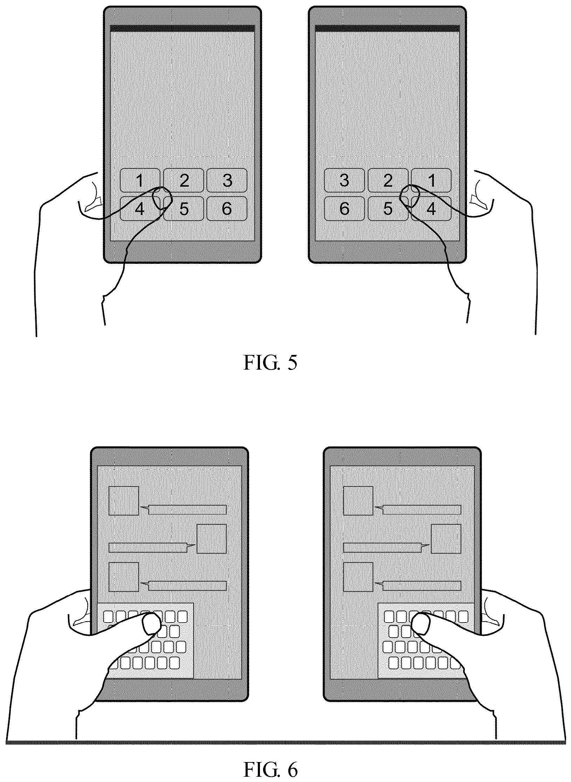

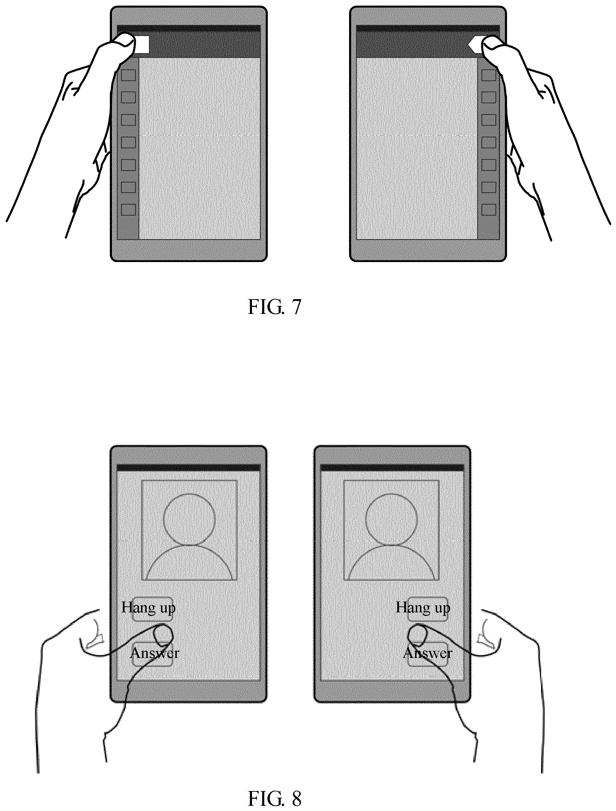

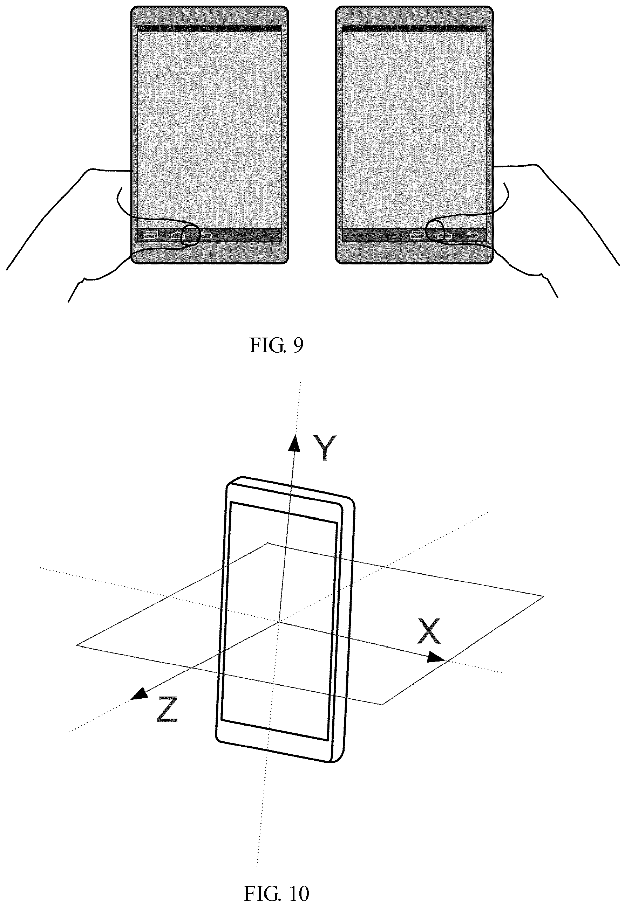

In the methods shown in FIG. 1 to FIG. 4, the operable element in the operation interface includes: a virtual keyboard, one or a plurality of keys on the virtual keyboard, a menu, a dialog box, and the like. It should be noted that the virtual keyboard mentioned in the present invention may be not only the virtual numerical keyboard shown in FIG. 5 and the virtual alphabetical keyboard shown in FIG. 6, but also any entirety formed by virtual keys. For example, the menus formed by virtual keys shown in FIG. 7 and FIG. 9 may also be considered as a virtual keyboard. Alternatively, virtual keys, which do not constitute an entirety but are functionally associated with each other, may be considered as a virtual keyboard. For example, the virtual keys "Hang up" and "Answer" shown in FIG. 8 may also be considered as a virtual keyboard.

The first operation mode, the second operation mode, and the operable element are described below with reference to FIG. 5 to FIG. 10. FIG. 5 to FIG. 10 show specific embodiments of the present invention. These examples are provided to help persons skilled in the art better understand embodiments of the present invention, but are not intended to limit the scope of the embodiments of the present invention.

FIG. 5 is a schematic diagram of operation modes and operable elements according to an embodiment of the present invention.

FIG. 5 shows the operation modes and operable elements in two states when a user of a terminal holds the terminal with the left hand (as shown in the left part in FIG. 5) and with the right hand (as shown in the right part in FIG. 5). As shown in FIG. 5, when the user of the terminal holds the terminal with the left hand, an operation interface of the terminal displays a first operation mode and operable elements in the first operation mode; and when the user of the terminal holds the terminal with the right hand, the operation interface of the terminal displays a second operation mode and operable elements in the second operation mode. According to use habits, it is expected to display numbers 1 and 4 in positions convenient for fingers that operate the terminal.

As shown in FIG. 5, in the first operation mode, the numbers 1 and 4 are closer to a left edge of the display interface, and numbers 3 and 6 are closer to a right edge of the display interface; in the second operation mode, the numbers 1 and 4 are closer to a right edge of the display interface, and the numbers 3 and 6 are closer to a left edge of the display interface. In the first operation mode, the numbers 1 and 4 are closer to the left edge of the display interface; therefore, it is more convenient for the user of the terminal to perform an operation on the numbers 1 and 4. In the second operation mode, it is more convenient for the user of the terminal to perform an operation on the numbers 1 and 4.

According to use habits, one or a plurality of keys on a virtual keyboard are closer to the left edge of the display interface in the first operation mode, or one or a plurality of keys on a virtual keyboard are closer to the right edge of the display interface in the second operation mode. In addition, according to a use frequency, one or a plurality of most frequently used keys on the virtual keyboard are closer to the left edge of the display interface in the first operation mode, and one or a plurality of most frequently used keys are closer to the right edge of the display interface in the second operation mode. In this way, the user of the terminal may conveniently perform an operation on one or a plurality of keys on the virtual keyboard.

According to the operation modes and operable elements of the terminal shown in FIG. 5, in the first operation mode, it is convenient for the user of the terminal to perform an operation on one or a plurality of keys on the virtual keyboard with the left hand; and in the second operation mode, and it is convenient for the user of the terminal to perform an operation on one or a plurality of keys on the virtual keyboard with the right hand.

FIG. 6 is a schematic diagram of operation modes and operable elements according to an embodiment of the present invention.

FIG. 6 shows operation modes and operable elements in two states when a user of a terminal holds the terminal with the left hand (as shown in the left part in FIG. 6) and with the right hand (as shown in the right part in FIG. 6). As shown in FIG. 6, when the user of the terminal holds the terminal with the left hand, an operation interface of the terminal displays a first operation mode and operable elements in the first operation mode; and when the user of the terminal holds the terminal with the right hand, the operation interface of the terminal displays a second operation mode and operable elements in the second operation mode.

As shown in FIG. 6, in the first operation mode, a virtual keyboard (that is, an operable element) is adjacent to a left edge of the display interface of the terminal; and in the second operation mode, the virtual keyboard (that is, an operable element) is adjacent to a right edge of the display interface of the terminal. In this way, the user of the terminal may conveniently operate the virtual keyboard.

According to the operation modes and operable elements of the terminal shown in FIG. 6, in the first operation mode, it is convenient for the user of the terminal to operate the virtual keyboard with the left hand; and in the second operation mode, it is convenient for the user of the terminal to operate the virtual keyboard with the right hand.

FIG. 7 is a schematic diagram of operation modes and operable elements according to an embodiment of the present invention.

FIG. 7 shows operation modes and operable elements in two states when a user of a terminal holds the terminal with the left hand (as shown in the left part in FIG. 7) and with the right hand (as shown in the right part in FIG. 7). As shown in FIG. 7, when the user of the terminal holds the terminal with the left hand, an operation interface of the terminal displays a first operation mode and operable elements in the first operation mode; and when the user of the terminal holds the terminal with the right hand, the operation interface of the terminal displays a second operation mode and operable elements in the second operation mode.

As shown in FIG. 7, in the first operation mode, a menu (that is, an operable element) is adjacent to a left edge of the display interface of the terminal; and in the second operation mode, a menu (that is, an operable element) is adjacent to a right edge of the display interface of the terminal. In this way, the user of the terminal may conveniently perform an operation on the menu.

According to the operation modes and operable elements of the terminal shown in FIG. 7, in the first operation mode, it is convenient for the user of the terminal to operate the menu with the left hand; and in the second operation mode, it is convenient for the user of the terminal to perform an operation on the menu with the right hand.

FIG. 8 is a schematic diagram of operation modes and operable elements according to an embodiment of the present invention.

FIG. 8 shows operation modes and operable elements in two states when a user of a terminal holds the terminal with the left hand (as shown in the left part in FIG. 8) and with the right hand (as shown in the right part in FIG. 8). As shown in FIG. 8, when the user of the terminal holds the terminal with the left hand, an operation interface of the terminal displays a first operation mode and operable elements in the first operation mode; and when the user of the terminal holds the terminal with the right hand, the operation interface of the terminal displays a second operation mode and operable elements in the second operation mode.

As shown in FIG. 8, in the first operation mode, the virtual key "Hang up" and the virtual key "Answer" are closer to a left edge of a display interface; and in the second operation mode, the virtual key "Hang up" and the virtual key "Answer" are closer to a right edge of a display interface. In this way, the user of the terminal may conveniently perform an operation on the virtual keys.

According to the operation modes and operable elements of the terminal shown in FIG. 8, in the first operation mode, it is convenient for the user of the terminal to hang up or answer a call with the left hand; and in the second operation mode, it is convenient for the user of the terminal to hang up or answer a call with the right hand.

FIG. 9 is a schematic diagram of operation modes and operable elements according to an embodiment of the present invention.

FIG. 9 shows operation modes and operable elements in two states when a user of a terminal holds the terminal with the left hand (as shown in the left part in FIG. 9) and with the right hand (as shown in the right part in FIG. 9). As shown in FIG. 9, when the user of the terminal holds the terminal with the left hand, an operation interface of the terminal displays a first operation mode and operable elements in the first operation mode; and when the user of the terminal holds the terminal with the right hand, the operation interface of the terminal displays a second operation mode and operable elements in the second operation mode.

As shown in FIG. 9, in the first operation mode, a virtual keyboard on a menu is adjacent to a left edge of a display interface; and in the second operation mode, a virtual keyboard in a menu is adjacent to a right edge of a display interface. Therefore, the user of the terminal may conveniently perform an operation on the virtual key on the menu.

According to the operation modes and operable elements of the terminal shown in FIG. 9, in the first operation mode, it is convenient for the user of the terminal to perform an operation on the menu with the left hand; and in the second operation mode, it is convenient for the user of the terminal to perform an operation on the menu with the right hand.

FIG. 10 is a schematic diagram of a space status of a terminal according to an embodiment of the present invention. FIG. 10 shows an initial space status of the terminal when the terminal faces a user of the terminal.

FIG. 11 is a schematic diagram of a direction of a space rotation change according to an embodiment of the present invention. The direction of the space rotation change shown in FIG. 11 is a clockwise rotation direction, that is, a terminal rotates clockwise when the screen of the terminal faces a user of the terminal.

FIG. 12 is a schematic diagram of a direction of a space rotation change according to an embodiment of the present invention. The direction of the space change shown in FIG. 12 is a clockwise rotation on a screen of the screen of a terminal.

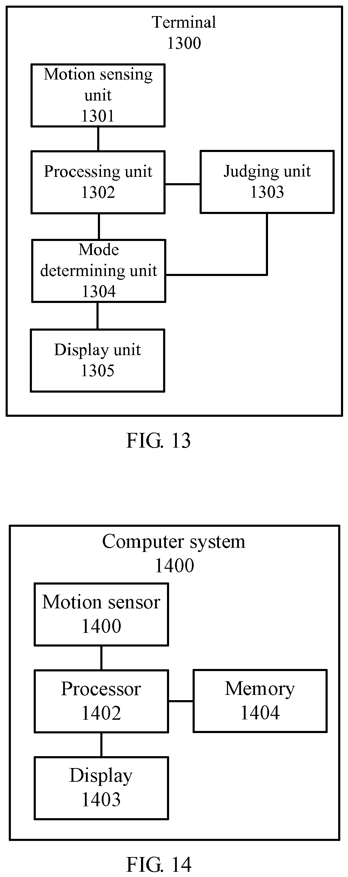

FIG. 13 is a structural block diagram of a terminal according to an embodiment of the present invention. The terminal shown in FIG. 13 may perform all steps in any one or a plurality of methods shown in FIG. 1 to FIG. 4. As shown in FIG. 13, a terminal 1300 includes: a motion sensing unit 1301, a processing unit 1302, a judging unit 1303, a mode determining unit 1304, and a display unit 1305.

The motion sensing unit 1301 is configured to acquire a space status parameter of the terminal 1300.

The processing unit 1302 is configured to acquire information about a space status change of the terminal 1300 according to the space status parameter acquired by the motion sensing unit.

The judging unit 1303 is configured to determine whether an extent of the space status change of the terminal 1300 falls within a preset range according to the information about the space status change.

The mode determining unit 1304 is configured to determine an operation mode of the terminal 1300 when the extent of the space status change of the terminal 1300 falls within the preset range, where the operation mode includes a first operation mode or a second operation mode, the first operation mode facilitates an operation on an operable element in an operation interface of the terminal with the left hand, and the second operation mode facilitates an operation on an operable element in an operation interface of the terminal with the right hand.

The display unit 1305 is configured to present the operable element in the operation interface of the terminal according to the determined operation mode.

According to the terminal 1300 shown in FIG. 13, the terminal 1300 is capable of determining the operation mode when the extent of the space status change falls within the preset range. Therefore, a user of the terminal may switch the terminal 1300 to a corresponding operation mode by adjusting the terminal 1300 so as to conveniently operate the terminal 1300 with a single hand.

Specifically, the motion sensing unit may be a motion sensor, such as a gravity sensor and a gyroscope.

Further, the processing unit 1302 is configured to determine the operation mode of the terminal 1300 when the extent of the space status change of the terminal 1300 falls within the preset range, including: the processing unit 1302 is specifically configured to determine the operation mode by using a direction of the space status change of the terminal acquired according to the information about the space status change. Alternatively, the processing unit 1302 is further specifically configured to determine the operation mode by acquiring current information about a left-hand operation or a right-hand operation on the terminal.

Specifically, in a comparative example, when the processing unit 1302 determines the operation mode by using the direction of the space status change of the terminal acquired according to the information about the space status change, the processing unit 1302 is specifically configured to acquire a direction of a space status movement change and an amplitude of the space status movement change of the terminal, where the direction of the space status change of the terminal includes a leftward movement change or a rightward movement change, the leftward movement change indicates that the terminal moves towards the left hand side of a user of the terminal when the screen of the terminal faces the user of the terminal, or the rightward movement change indicates that the terminal moves towards the right hand side of the user of the terminal when the screen of the terminal faces the user of the terminal; and the amplitude of the space status movement change includes a leftward movement amplitude or a rightward movement amplitude of the terminal. The judging unit 1303 is specifically configured to determine that the extent of the space status change of the terminal falls within the preset range when the space status movement change falls within a preset amplitude change range. The mode determining unit 1304 is specifically configured to determine that the operation mode is the first operation mode when the extent of the space status change of the terminal falls within the preset range and the direction of the space status movement change of the terminal is the leftward movement change, and determine that the operation mode is the second operation mode when the extent of the space status change of the terminal falls within the preset range and the direction of the space status movement change of the terminal is the rightward movement change.

Specifically, in another comparative example, when the processing unit 1302 determines the operation mode by using the direction of the space status change of the terminal acquired according to the information about the space status change, the processing unit 1302 is specifically configured to determine a direction of a space status rotation change and an angle of the space status rotation change of the terminal, where the direction of the space status rotation change of the terminal includes a clockwise rotation direction or a counterclockwise rotation direction, the clockwise rotation direction indicates that the terminal rotates clockwise when the screen of the terminal faces a user of the terminal, the counter-clockwise rotation direction indicates that the terminal rotates counterclockwise when the screen of the terminal faces the user of the terminal, and the clockwise rotation and the counterclockwise rotation do not include clockwise rotation and counter-clockwise rotation on a plane of the screen of the terminal; and the angle of the space status rotation change includes a clockwise rotation angle or a counterclockwise rotation angle. The judging unit 1303 is specifically configured to determine that the extent of the space status change of the terminal falls within the preset range when the angle of the space status rotation change falls within a preset change range. The mode determining unit 1304 is specifically configured to determine that the operation mode is the first operation mode when the extent of the space status change of the terminal falls within the preset range and the direction of the space status rotation change of the terminal is the clockwise rotation direction, and determine that the operation mode is the second operation mode when the extent of the space status change of the terminal falls within the preset range and the direction of the space status rotation change of the terminal is the counterclockwise rotation direction.

Specifically, in an embodiment, when the processing unit 1302 determines the operation mode by acquiring current information about a left-hand operation or a right-hand operation on the terminal, the processing unit 1302 is specifically configured to determine a shake frequency of the terminal. The judging unit 1303 is specifically configured to determine that the extent of a space filling change of the terminal falls within the preset range when the shake frequency of the terminal falls within a preset frequency change range. The mode determining unit 1304 is specifically configured to acquire a current operation mode of the terminal, where the current operation mode includes a first operation mode or a second operation mode; determine that the operation mode is the second operation mode when the extent of the space status change of the terminal falls within the preset range and the acquired current operation mode is the first operation mode; and determine that the operation mode is the first operation mode when the extent of the space status change of the terminal falls within the preset range and the acquired current operation mode is the second operation mode.

Specifically, in another comparative example, when the processing unit 1302 determines the operation mode by acquiring current information about a left-hand operation or a right-hand operation on the terminal, the processing unit 1302 is specifically configured to determine a shake frequency of the terminal. The judging unit 1303 is specifically configured to determine that the extent of the space status change of the terminal falls within the preset range when the shake frequency of the terminal falls within a preset frequency change range. The processing unit 1302 is further configured to acquire holding position information, where the holding position information includes left-hand holding or right-hand holding. Specifically, holding positions are different when a user of the terminal operates the terminal with the left or right hand. In other words, a specific position can be contacted when the user holds the terminal with the left hand, and a different specific position may be contacted when the user holds the terminal with the right hand. If a contact or non-contact sensor (for example, a touch sensor, a photoelectric sensor, or the like) may be arranged in a specific position, when a hand of the user blocks or touches the sensor in the specific position, the processing unit 1302 may determine whether the user of the terminal uses the left hand or right hand to hold the terminal according to position of the sensor. The mode determining unit 1304 is specifically configured to determine that the operation mode is the second operation mode when the extent of the space status change of the terminal falls within the preset range and the holding position information is the right-hand holding, and determine that the operation mode is the first operation mode when the extent of the space status change of the terminal falls within the preset range and the holding position information is the left-hand holding.

Optionally, in an embodiment, the display unit 1305 is specifically configured to display an operable element navigated in an operation interface closer to a left edge of the display interface of the terminal in the first operation mode than in the second operation mode; and display an operable element in an operation interface closer to a right edge of the display interface of the terminal in the second operation mode than in the first operation mode.

Optionally, in another embodiment, the display unit 1305 is specifically configured to display an operable element in an operation interface adjacent to a left edge of the display interface of the terminal in the first operation mode, and an operable element in an operation interface adjacent to a right edge of the display interface of the terminal in the second operation mode.

An embodiment of the present invention further provides a computer system. FIG. 14 is a structural block diagram of a computer system according to an embodiment of the present invention. The computer system shown in FIG. 14 may implement all steps in any one or a plurality of methods shown in FIG. 1 to FIG. 4. As shown in FIG. 14, a computer system 1400 includes: a motion sensor 1401, a processor 1402, a display 1403, and a memory 1404, where the motion sensor 1401, the processor 1402, the display 1403, and the memory 1404 are connected by using a bus.

The motion sensor 1401 is configured to acquire a space status parameter of the terminal 1400.

The memory 1404 is configured to store data or code.

The processor 1402 is configured to invoke the data or code in the memory to implement: acquire information about a space status change of the terminal 1400 according to the space status parameter acquired by the motion sensor.

The processor 1402 is further configured to invoke the data or code in the memory to implement: determine whether an extent of the space status change of the terminal 1400 falls within a preset range according to the information about the space status change.

The processor 1402 is further configured to invoke the data or code in the memory to implement: determine an operation mode of the terminal 1400 when the extent of the space status change of the terminal 1400 falls within the preset range, where the operation mode includes a first operation mode or a second operation mode, the first operation mode facilitates an operation on an operable element in an operation interface of the terminal with the left hand, and the second operation mode facilitates an operation on an operable element in an operation interface of the terminal with the right hand.

The display 1403 is configured to present the operable element in the operation interface of the terminal according to the determined operation mode.

According to the terminal 1400 shown in FIG. 14, the terminal 1400 is capable of determining the operation mode when the extent of the space status change falls within the preset range. Therefore, the user of the terminal may switch the terminal 1400 to a corresponding operation mode by adjusting the terminal 1400 so as to conveniently operate the terminal 1400 with a single hand.

Specifically, the motion sensor may be a gravity sensor, a gyroscope, or the like.

Further, the processor 1402 is configured to invoke the data or code in the memory to implement: determine the operation mode of the terminal 1400 when the extent of the space status change of the terminal 1400 falls within the preset range, including: the processor 1402 is specifically configured to determine the operation mode by using a direction of the space status change of the terminal acquired according to the information about the space status change. Alternatively, the processor 1402 is further specifically configured to determine the operation mode by acquiring current information about a left-hand operation or a right-hand operation on the terminal.

Specifically, in a comparative example, when the processor 1402 determines the operation mode by using the direction of the space status change of the terminal acquired according to the information about the space status change, the processor 1402 is specifically configured to invoke the data or code in the memory to implement: acquire a direction of a space status movement change and an amplitude of the space status movement change of the terminal, where the direction of the space status movement change of the terminal includes a leftward movement change or a rightward movement change, the leftward movement change indicates that the terminal moves towards the left hand side of a user of the terminal when the screen of the terminal faces the user of the terminal, or the rightward movement change indicates that the terminal moves towards the right hand side of the user of the terminal when the screen of the terminal faces the user of the terminal; and the amplitude of the space status movement change includes a leftward movement amplitude or a rightward movement amplitude of the terminal. The processor 1402 is specifically configured to determine that the extent of the space status change of the terminal falls within the preset range when the space status movement change falls within a preset amplitude change range. The processor 1402 is specifically configured to invoke the data or code in the memory to implement: determine that the operation mode is the first operation mode when the extent of the space status change of the terminal falls within the preset range and the direction of the space status movement change of the terminal is the leftward movement change, and determine that the operation mode is the second operation mode when the extent of the space status change of the terminal falls within the preset range and the direction of the space status movement change of the terminal is the rightward movement change.

Specifically, in another comparative example, when the processor 1402 invokes data or code stored in the memory to implement: determine the operation mode by using the direction of the space status change of the terminal acquired according to the information about the space status change, the processor 1402 is specifically configured to invoke the data or code in the memory to implement: determine a direction of a space status rotation change and an angle of the space status rotation change of the terminal, where the direction of the space status rotation change of the terminal includes a clockwise rotation direction or a counterclockwise rotation direction, the clockwise rotation direction indicates that the terminal rotates clockwise when the screen of the terminal faces a user of the terminal, the counterclockwise rotation direction indicates that the terminal rotates counterclockwise when the screen of the terminal faces the user of the terminal, and the clockwise rotation and the counterclockwise rotation do not include clockwise rotation and counterclockwise rotation on a plane of the screen of the terminal; and the angle of the space status rotation change includes a clockwise rotation angle or a counterclockwise rotation angle. The processor 1402 is specifically configured to invoke the data or code in the memory to implement: determine that the extent of the space status change of the terminal falls within the preset range when the angle of the space status rotation change falls within a preset change range. The processor is specifically configured to determine that the operation mode is the first operation mode when the extent of the space status change of the terminal falls within the preset range and the direction of the space status rotation change of the terminal is the clockwise rotation direction, and determine that the operation mode is the second operation mode when the extent of the space status change of the terminal falls within the preset range and the direction of the space status rotation change of the terminal is the counterclockwise rotation direction.

Specifically, in another embodiment, when the processor 1402 determines the operation mode by acquiring current information about a left-hand operation or a right-hand operation on the terminal, the processor 1402 is specifically configured to invoke the data or code in the memory to implement: determine a shake frequency of the terminal. The processor 1402 is specifically configured to invoke the data or code in the memory to implement: determine that the extent of a space filling change of the terminal falls within the preset range when the shake frequency of the terminal falls within a preset frequency change range. The processor 1402 is specifically configured to invoke the data or code in the memory to implement: acquire a current operation mode of the terminal, where the current operation mode includes a first operation mode or a second operation mode; determine that the operation mode is the second operation mode when the extent of the space status change of the terminal falls within the preset range and the acquired current operation mode is the first operation mode; and determine that the operation mode is the first operation mode when the extent of the space status change of the terminal falls within the preset range and the acquired current operation mode is the second operation mode.

Specifically, in another comparative example, when the processor 1402 determines the operation mode by acquiring current information about a left-hand operation or a right-hand operation on the terminal, the processor 1402 is specifically configured to invoke the data or code in the memory to implement: determine a shake frequency of the terminal. The processor 1402 is specifically configured to determine that the extent of the space status change of the terminal falls within the preset range when the shake frequency of the terminal falls within a preset frequency change range. The processing unit 1402 is further configured to invoke the data or code in the memory to implement: acquire holding position information, where the holding position information includes left-hand holding or right-hand holding. Specifically, holding positions are different when a user of the terminal operates the terminal with the left or right hand. In other words, a specific position can be contacted when the user holds the terminal with the left hand, and a different specific position may be contacted when the user holds the terminal with the right hand. If a contact or non-contact sensor (for example, a touch sensor, a photoelectric sensor, or the like) may be arranged in a specific position, when a hand of the user blocks or touches the sensor in the specific position, the processor 1402 may determine whether the user of the terminal uses the left hand or right hand to hold the terminal according to position of the sensor. The mode determining unit 1402 is specifically configured to invoke the data or code in the memory to implement: determine that the operation mode is the second operation mode when the extent of the space status change of the terminal falls within the preset range and the holding position information is the right-hand holding, and determine that the operation mode is the first operation mode when the extent of the space status change of the terminal falls within the preset range and the holding position information is the left-hand holding.

Optionally, in an embodiment, the display 1403 is specifically configured to display an operable element navigated in an operation interface closer to a left edge of the display interface of the terminal in the first operation mode than in the second operation mode; and display an operable element in an operation interface closer to a right edge of the display interface of the terminal in the second operation mode than in the first operation mode.

Optionally, in another embodiment, the display 1403 is specifically configured to display an operable element in an operation interface adjacent to a left edge of the display interface of the terminal in the first operation mode, and an operable element in an operation interface adjacent to a right edge of a display interface of the terminal in the second operation mode.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for switching and presenting a terminal operation mode, comprising:
acquiring (101) information about a space status change of a terminal;
determining (102) whether an extent of the space status change of the terminal falls within a preset range according to the information about the space status change;
determining (103, 203, 303, 403) an operation mode of the terminal when the extent of the space status change of the terminal falls within the preset range, wherein the operation mode comprises a first operation mode or a second operation mode, the first operation mode facilitates an operation on an operable element in an operation interface of the terminal with the left hand, and the second operation mode facilitates an operation on an operable element in an operation interface of the terminal with the right hand; and
presenting (104, 204, 304, 404) the operable element in the operation interface of the terminal according to the determined operation mode;
wherein the determining (103, 203, 303, 403) an operation mode of the terminal when the extent of the space status change of the terminal falls within the preset range comprises:
determining the operation mode by acquiring current information about a left-hand operation or a right-hand operation on the terminal when the extent of the space status change of the terminal falls within the preset range.
**characterized in that**:
the acquiring (101) information about a space status change of a terminal comprises:
determining (401) a shake frequency of the terminal;
the determining (402) whether an extent of the space status change of the terminal falls within a preset range according to the information about the space status change comprises:
determining that the extent of the space status change of the terminal falls within the preset range when the shake frequency of the terminal falls within a preset frequency change range; and
the determining the operation mode by acquiring current information about a left-hand operation or a right-hand operation on the terminal when the extent of the space status change of the terminal falls within the preset range comprises:
acquiring a current operation mode of the terminal, wherein the current operation mode comprising a first operation mode or a second operation mode; determining that the operation mode is the second operation mode when the extent of the space status change of the terminal falls within the preset range and the acquired current operation mode is the first operation mode; and determining that the operation mode is the first operation mode when the extent of the space status change of the terminal falls within the preset range and the acquired current operation mode is the second operation mode.

2. The method according to claim 1, wherein that the first operation mode facilitates an operation on an operable element in an operation interface of the terminal with the left hand, and the second operation mode facilitates an operation on an operable element in an operation interface of the terminal with the right hand comprises:
the operable element in the operation interface is closer to a left edge of the display interface in the first operation mode than in the second operation mode; and
the operable element in the operation interface is closer to a right edge of the display interface in the second operation mode than in the first operation mode.

3. The method according to claim 1, wherein that the first operation mode facilitates an operation on an operable element in an operation interface of the terminal with the left hand, and the second operation mode facilitates an operation on an operable element in an operation interface of the terminal with the right hand comprises:
the operable element on the operation interface is adjacent to a left edge of the display interface of the terminal in the first operation mode; and
the operable element on the operation interface is adjacent to a right edge of the display interface of the terminal in the second operation mode.

4. The method according to any one of claims 1 to 3, wherein the operable element in the operation interface comprises a virtual keyboard, one or a plurality of keys on the virtual keyboard, a menu, or a dialog box.

5. A terminal (1300), comprising:
a motion sensing unit (1301), configured to acquire a space status parameter of the terminal;
a processing unit (1302), configured to acquire information about a space status change of the terminal according to the space status parameter acquired by the motion sensing unit;
a judging unit (1303), configured to determine whether an extent of the space status change of the terminal falls within a preset range according to the information about the space status change;
a mode determining unit (1304), configured to determine an operation mode of the terminal when the extent of the space status change of the terminal falls within the preset range, wherein the operation mode comprises a first operation mode or a second operation mode, the first operation mode facilitates an operation on an operable element in an operation interface of the terminal with the left hand, and the second operation mode facilitates an operation on an operable element in an operation interface of the terminal with the right hand; and
a display unit (1305), configured to display the operable element in the operation interface of the terminal according to the determined operation mode;
wherein the mode determining unit (1304) is specifically configured to determine the operation mode by acquiring current information on a left-hand operation or a right-hand operation on the terminal.
**characterized in that**:
the processing unit (1302) is specifically configured to determine a shake frequency of the terminal;
the judging unit (1303) is specifically configured to determine that the extent of the space status change of the terminal falls within the preset range when the shake frequency of the terminal falls within a preset frequency change range; and
the mode determining unit (1304) is specifically configured to: acquire a current operation mode of the terminal, wherein the current operation mode comprises a first operation mode or a second operation mode; determine that the operation mode is the second operation mode when the extent of the space status change of the terminal falls within the preset range and the acquired current operation mode is the first operation mode; and determine that the operation mode is the first operation mode when the extent of the space status change of the terminal falls within the preset range and the acquired current operation mode is the second operation mode.

6. The terminal (1300) according to claim 5, wherein
the display unit (1305) is specifically configured to display the operable element in an operation interface closer to a left edge of the display interface of the terminal in the first operation mode than in the second operation mode; and
the display unit (1305) is specifically configured to display the operable element in an operation interface closer to a right edge of the display interface of the terminal in the second operation mode than in the first operation mode.

7. The terminal (1300) according to claim 5, wherein
the display unit (1305) is specifically configured to display the operable element in an operation interface adjacent to a left edge of the display interface of the terminal in the first operation mode; and
the display unit (1305) is specifically configured to display the operable element on an operation interface adjacent to a right edge of the display interface of the terminal in the second operation mode.

## Patentansprüche

1. Verfahren zum Umschalten und Präsentieren eines Endgerätbedienungsmodus, das Folgendes umfasst:
Erhalten (101) von Informationen über eine Raumzustandsänderung eines Endgerätes;
Bestimmen (102), ob ein Ausmaß der Raumzustandsänderung des Endgerätes in einen vorbestimmten Bereich fällt, gemäß den Informationen über die Raumzustandsänderung;
Bestimmen (103, 203, 303, 403) eines Bedienungsmodus des Endgerätes, wenn das Ausmaß der Raumzustandsänderung des Endgerätes in den vorbestimmten Bereich fällt, wobei der Bedienungsmodus einen ersten Bedienungsmodus oder einen zweiten Bedienungsmodus umfasst, wobei der erste Bedienungsmodus eine Bedienung eines Bedienungselements in einer Bedienungsschnittstelle des Endgerätes mit der linken Hand erleichtert und der zweite Bedienungsmodus eine Bedienung eines Bedienungselements in einer Bedienungsschnittstelle des Endgerätes mit der rechten Hand erleichtert; und
Präsentieren (104, 204, 304, 404) des Bedienungselements in der Bedienungsschnittstelle des Endgerätes gemäß dem bestimmten Bedienungsmodus;
wobei das Bestimmen (103, 203, 303, 403) eines Bedienungsmodus des Endgerätes, wenn das Ausmaß der Raumzustandsänderung des Endgerätes in den vorbestimmten Bereich fällt, Folgendes umfasst:
Bestimmen des Bedienungsmodus durch Erhalten momentaner Informationen über eine Linke-Hand-Bedienung oder eine Rechte-Hand-Bedienung des Endgerätes, wenn das Ausmaß der Raumzustandsänderung des Endgerätes in den vorbestimmten Bereich fällt;
**dadurch gekennzeichnet, dass**:
das Erhalten (101) von Informationen über eine Raumzustandsänderung eines Endgerätes Folgendes umfasst:
Bestimmen (401) einer Schüttelfrequenz des Endgerätes;
wobei das Bestimmen (402), ob ein Ausmaß der Raumzustandsänderung des Endgerätes in einen vorbestimmten Bereich fällt, gemäß den Informationen über die Raumzustandsänderung Folgendes umfasst:
Bestimmen, dass das Ausmaß der Raumzustandsänderung des Endgerätes in den vorbestimmten Bereich fällt, wenn die Schüttelfrequenz des Endgerätes in einen vorbestimmten Frequenzänderungsbereich fällt; und
wobei das Bestimmen des Bedienungsmodus durch Erhalten momentaner Informationen über eine Linke-Hand-Bedienung oder eine Rechte-Hand-Bedienung des Endgerätes, wenn das Ausmaß der Raumzustandsänderung des Endgerätes in den vorbestimmten Bereich fällt, Folgendes umfasst:
Erhalten eines momentanen Bedienungsmodus des Endgerätes, wobei der momentane Bedienungsmodus einen ersten Bedienungsmodus oder einen zweiten Bedienungsmodus umfasst; Bestimmen, dass der Bedienungsmodus der zweite Bedienungsmodus ist, wenn das Ausmaß der Raumzustandsänderung des Endgerätes in den vorbestimmten Bereich fällt und der erhaltene momentane Bedienungsmodus der erste Bedienungsmodus ist; und Bestimmen, dass der Bedienungsmodus der erste Bedienungsmodus ist, wenn das Ausmaß der Raumzustandsänderung des Endgerätes in den vorbestimmen Bereich fällt und der erhaltene momentane Bedienungsmodus der zweite Bedienungsmodus ist.

2. Verfahren nach Anspruch 1, wobei das Erleichtern einer Bedienung eines Bedienungselements in einer Bedienungsschnittstelle des Endgerätes mit der linken Hand durch den ersten Bedienungsmodus und das Erleichtern einer Bedienung eines Bedienungselements in einer Bedienungsschnittstelle des Endgerätes mit der rechten Hand durch den zweiten Bedienungsmodus Folgendes umfasst:
das Bedienungselement in der Bedienungsschnittstelle ist in dem ersten Bedienungsmodus näher an einem linken Rand der Anzeigeschnittstelle als in dem zweiten Bedienungsmodus; und
das Bedienungselement in der Bedienungsschnittstelle ist in dem zweiten Bedienungsmodus näher an einem rechten Rand der Anzeigeschnittstelle als in dem ersten Bedienungsmodus.

3. Verfahren nach Anspruch 1, wobei das Erleichtern einer Bedienung eines Bedienungselements in einer Bedienungsschnittstelle des Endgerätes mit der linken Hand durch den ersten Bedienungsmodus und das Erleichtern einer Bedienung eines Bedienungselements in einer Bedienungsschnittstelle des Endgerätes mit der rechten Hand durch den zweiten Bedienungsmodus Folgendes umfasst:
das Bedienungselement in der Bedienungsschnittstelle grenzt in dem ersten Bedienungsmodus an einen linken Rand der Anzeigeschnittstelle des Endgerätes an; und
das Bedienungselement in der Bedienungsschnittstelle grenzt in dem zweiten Bedienungsmodus an einen rechten Rand der Anzeigeschnittstelle des Endgerätes an.

4. Verfahren nach einem der Ansprüche 1 bis 3, wobei das Bedienungselement in der Bedienungsschnittstelle eine virtuelle Tastatur, eine oder mehrere Tasten auf der virtuellen Tastatur, ein Menü oder ein Dialogfenster umfasst.

5. Endgerät (1300), das Folgendes umfasst:
eine Bewegungserfassungseinheit (1301), die zum Erhalten eines Raumzustandsparameters des Endgerätes konfiguriert ist;
eine Verarbeitungseinheit (1302), die zum Erhalten von Informationen über eine Raumzustandsänderung des Endgerätes gemäß dem durch die Bewegungserfassungseinheit erhaltenen Raumzustandsparameter konfiguriert ist;
eine Beurteilungseinheit (1303), die zum Bestimmen, ob ein Ausmaß der Raumzustandsänderung des Endgerätes in einen vorbestimmten Bereich fällt, gemäß den Informationen über die Raumzustandsänderung konfiguriert ist;
eine Modusbestimmungseinheit (1304), die zum Bestimmen eines Bedienungsmodus des Endgerätes, wenn das Ausmaß der Raumzustandsänderung des Endgerätes in den vorbestimmten Bereich fällt, konfiguriert ist, wobei der Bedienungsmodus einen ersten Bedienungsmodus oder einen zweiten Bedienungsmodus umfasst, wobei der erste Bedienungsmodus eine Bedienung eines Bedienungselements in einer Bedienungsschnittstelle des Endgerätes mit der linken Hand erleichtert und der zweite Bedienungsmodus eine Bedienung eines Bedienungselements in einer Bedienungsschnittstelle des Endgerätes mit der rechten Hand erleichtert; und
eine Anzeigeeinheit (1305), die zum Anzeigen des Bedienungselements in der Bedienungsschnittstelle des Endgerätes gemäß dem bestimmten Bedienungsmodus konfiguriert ist;
wobei die Modusbestimmungseinheit (1304) speziell zum Bestimmen des Bedienungsmodus durch Erhalten momentaner Informationen über eine Linke-Hand-Bedienung oder eine Rechte-Hand-Bedienung des Endgerätes konfiguriert ist;
**dadurch gekennzeichnet, dass**:
die Verarbeitungseinheit (1302) speziell zum Bestimmen einer Schüttelfrequenz des Endgerätes konfiguriert ist;
die Beurteilungseinheit (1303) speziell zum Bestimmen, dass das Ausmaß der Raumzustandsänderung des Endgerätes in den vorbestimmten Bereich fällt, wenn die Schüttelfrequenz des Endgerätes in einen vorbestimmten Frequenzänderungsbereich fällt, konfiguriert ist; und
die Modusbestimmungseinheit (1304) speziell zu Folgendem konfiguriert ist:
Erhalten eines momentanen Bedienungsmodus des Endgerätes, wobei der momentane Bedienungsmodus einen ersten Bedienungsmodus oder einen zweiten Bedienungsmodus umfasst; Bestimmen, dass der Bedienungsmodus der zweite Bedienungsmodus ist, wenn das Ausmaß der Raumzustandsänderung des Endgerätes in den vorbestimmten Bereich fällt und der erhaltene momentane Bedienungsmodus der erste Bedienungsmodus ist; und Bestimmen, dass der Bedienungsmodus der erste Bedienungsmodus ist, wenn das Ausmaß der Raumzustandsänderung des Endgerätes in den vorbestimmen Bereich fällt und der erhaltene momentane Bedienungsmodus der zweite Bedienungsmodus ist.

6. Endgerät (1300) nach Anspruch 5, wobei:
die Anzeigeeinheit (1305) speziell zum Anzeigen des Bedienungselements in einer Bedienungsschnittstelle näher an einem linken Rand der Anzeigeschnittstelle des Endgerätes in dem ersten Bedienungsmodus als in dem zweiten Bedienungsmodus konfiguriert ist; und
die Anzeigeeinheit (1305) speziell zum Anzeigen des Bedienungselements in einer Bedienungsschnittstelle näher an einem rechten Rand der Anzeigeschnittstelle des Endgerätes in dem zweiten Bedienungsmodus als in dem ersten Bedienungsmodus konfiguriert ist.

7. Endgerät (1300) nach Anspruch 5, wobei
die Anzeigeeinheit (1305) speziell zum Anzeigen des Bedienungselements in einer Bedienungsschnittstelle in dem ersten Bedienungsmodus an einen linken Rand der Anzeigeschnittstelle des Endgerätes angrenzend konfiguriert ist; und
die Anzeigeeinheit (1305) speziell zum Anzeigen des Bedienungselements in einer Bedienungsschnittstelle in dem zweiten Bedienungsmodus an einen rechten Rand der Anzeigeschnittstelle des Endgerätes angrenzend konfiguriert ist.

## Revendications

1. Procédé de commutation et de présentation d'un mode de fonctionnement de terminal, comprenant :
l'acquisition (101) d'informations relatives à un changement d'état spatial d'un terminal ;
la détermination (102) qu'un degré du changement d'état spatial du terminal est compris ou non dans une plage prédéfinie conformément aux informations relatives au changement d'état spatial ;
la détermination (103, 203, 303, 403) d'un mode de fonctionnement du terminal quand le degré de changement d'état spatial du terminal est compris dans la plage prédéfinie, dans lequel le mode de fonctionnement comprend un premier mode de fonctionnement ou un second mode de fonctionnement, le premier mode de fonctionnement permettant une opération sur un élément actionnable dans une interface opérationnelle du terminal avec la main gauche, et le second mode de fonctionnement permettant une opération sur un élément actionnable dans une interface opérationnelle du terminal avec la main droite ; et
la présentation (104, 204, 304, 404) de l'élément actionnable dans l'interface opérationnelle du terminal conformément au mode de fonctionnement déterminé ;
dans lequel la détermination (103, 203, 303, 403) d'un mode de fonctionnement du terminal quand le degré de changement d'état spatial du terminal est compris dans la plage prédéfinie comprend :
la détermination du mode de fonctionnement en acquérant des informations actuelles sur une opération par main gauche ou une opération par main droite sur le terminal quand le degré du changement d'état spatial du terminal est compris dans la plage prédéfinie,
**caractérisé en ce que** :
l'acquisition (101) des informations relatives à un changement d'état spatial d'un terminal comprend :
la détermination (401) d'une fréquence de secousse du terminal ;
la détermination (402) qu'un degré du changement d'état spatial du terminal est compris ou non dans une plage prédéfinie conformément aux informations relatives au changement d'état spatial comprend :
la détermination que le degré du changement d'état spatial du terminal est compris dans la plage prédéfinie quand la fréquence de secousse du terminal est comprise dans une plage de changement de fréquence prédéfinie ; et
la détermination du mode de fonctionnement en acquérant des informations actuelles sur une opération par main gauche ou une opération par main droite sur le terminal quand le degré du changement d'état spatial du terminal est compris dans la plage prédéfinie comprend :
l'acquisition d'un mode de fonctionnement actuel du terminal, dans lequel le mode de fonctionnement actuel comprend un premier mode de fonctionnement ou un second mode de fonctionnement ; la détermination que le mode de fonctionnement est le second mode de fonctionnement quand le degré du changement d'état spatial du terminal est compris dans la plage prédéfinie et le mode de fonctionnement actuel acquis est le premier mode de fonctionnement ; et la détermination que le mode de fonctionnement est le premier mode de fonctionnement quand le degré du changement d'état spatial du terminal est compris dans la plage prédéfinie et le mode de fonctionnement actuel acquis est le second mode de fonctionnement.

2. Procédé selon la revendication 1, dans lequel le fait que le premier mode de fonctionnement permette une opération sur un élément actionnable dans une interface opérationnelle du terminal avec la main gauche, et le second mode de fonctionnement permette une opération sur un élément actionnable dans une interface opérationnelle du terminal avec la main droite comprend :
l'élément actionnable dans l'interface opérationnelle est plus proche d'un bord gauche de l'interface d'affichage dans le premier mode de fonctionnement que dans le second mode de fonctionnement ; et
l'élément actionnable dans l'interface opérationnelle est plus proche d'un bord droit de l'interface d'affichage dans le second mode de fonctionnement que dans le premier mode de fonctionnement.

3. Procédé selon la revendication 1, dans lequel le fait que le premier mode de fonctionnement permette une opération sur un élément actionnable dans une interface opérationnelle du terminal avec la main gauche, et le second mode de fonctionnement permettant une opération sur un élément actionnable dans une interface opérationnelle du terminal avec la main droite comprend :
l'élément actionnable dans l'interface opérationnelle est adjacent à un bord gauche de l'interface d'affichage du terminal dans le premier mode de fonctionnement ; et
l'élément actionnable dans l'interface opérationnelle est adjacent à un bord droit de l'interface d'affichage du terminal dans le second mode de fonctionnement.

4. Procédé selon l'une quelconque des revendications 1 à 3, dans lequel l'élément actionnable dans l'interface opérationnelle comprend un clavier virtuel, une ou une pluralité de touches sur le clavier virtuel, un menu ou une boîte de dialogue.

5. Terminal (1300), comprenant :
une unité de détection de mouvement (1301), configurée pour acquérir un paramètre d'état spatial du terminal ;
une unité de traitement (1302), configurée pour acquérir des informations relatives à un changement d'état spatial du terminal conformément au paramètre d'état spatial acquis par l'unité de détection de mouvement ;
une unité de jugement (1303), configurée pour déterminer qu'un degré du changement d'état spatial du terminal est compris ou non dans une plage prédéfinie conformément aux informations relatives au changement d'état spatial ;
une unité de détermination de mode (1304), configurée pour déterminer un mode de fonctionnement du terminal quand le degré de changement d'état spatial du terminal est compris dans la plage prédéfinie, dans lequel le mode de fonctionnement comprend un premier mode de fonctionnement ou un second mode de fonctionnement, le premier mode de fonctionnement permettant une opération sur un élément actionnable dans une interface opérationnelle du terminal avec la main gauche, et le second mode de fonctionnement permettant une opération sur un élément actionnable dans une interface opérationnelle du terminal avec la main droite ; et
une unité d'affichage (1305), configurée pour afficher l'élément actionnable dans l'interface opérationnelle du terminal conformément au mode de fonctionnement déterminé ;
dans lequel l'unité de détermination de mode (1304) est configurée spécifiquement pour déterminer le mode de fonctionnement en acquérant des informations actuelles sur une opération par main gauche ou une opération par main droite sur le terminal ;
**caractérisé en ce que** :
l'unité de traitement (1302) est configurée spécifiquement pour déterminer une fréquence de secousse du terminal ;
l'unité de détermination (1303) est configurée spécifiquement pour déterminer que le degré du changement d'état spatial du terminal est compris dans la plage prédéfinie quand la fréquence de secousse du terminal est comprise dans une plage de changement de fréquence prédéfinie ; et
l'unité de détermination de mode (1304) est configurée spécifiquement pour :
acquérir un mode de fonctionnement actuel du terminal, dans lequel le mode de fonctionnement actuel comprend un premier mode de fonctionnement ou un second mode de fonctionnement ; déterminer que le mode de fonctionnement est le second mode de fonctionnement quand le degré du changement d'état spatial du terminal est compris dans la plage prédéfinie et le mode de fonctionnement actuel acquis est le premier mode de fonctionnement ; et déterminer que le mode de fonctionnement est le premier mode de fonctionnement quand le degré du changement d'état spatial du terminal est compris dans la plage prédéfinie et le mode de fonctionnement actuel acquis est le second mode de fonctionnement.

6. Terminal (1300) selon la revendication 5, dans lequel :
l'unité d'affichage (1305) est configurée spécifiquement pour afficher l'élément actionnable dans une interface opérationnelle plus près d'un bord gauche de l'interface d'affichage du terminal dans le premier mode de fonctionnement que dans le second mode de fonctionnement ; et
l'unité d'affichage (1305) est configurée spécifiquement pour afficher l'élément actionnable dans une interface opérationnelle plus près d'un bord droit de l'interface d'affichage du terminal dans le second mode de fonctionnement que dans le premier mode de fonctionnement.

7. Terminal (1300) selon la revendication 5, dans lequel :
l'unité d'affichage (1305) est configurée spécifiquement pour afficher l'élément actionnable dans une interface opérationnelle adjacent à un bord gauche de l'interface d'affichage du terminal dans le premier mode de fonctionnement ; et
l'unité d'affichage (1305) est configurée spécifiquement pour afficher l'élément actionnable dans une interface opérationnelle adjacent à un bord droit de l'interface d'affichage du terminal dans le second mode de fonctionnement.
